# EUROPEAN PATENT APPLICATION

(11) **EP 4 843 683 A1**
(43) Date of publication of application: **25.11.2026**
(21) Application number: 26180035.3
(22) Date of filing: 20.05.2026
(51) Int. Cl.: B21D 7/12, B21D 7/02, B21D 7/16, B21D 7/024, B21D 9/07, G01B 11/16, G02B 6/00

(54) **MACHINE FOR BENDING ELONGATED PIECES**

(30) Priority: 23.05.2025 IT 202500011743
(71) Applicant: BLM S.p.A., 22063 Cantù (CO) (IT)
(72) Inventor: SCOLARI, Alberto, I-20900 MONZA (Monza e Brianza) (IT); GRISORIO, Antonio, I-76125 TRANI (Barletta-Andria-Trani) (IT); MALGUZZI, Ugo, I-26010 CORTE DE' FRATI (Cremona) (IT); MUSSI, Valerio, I-29121 PIACENZA (IT); MERAVIGLIA, Marco, I-21047 SARONNO (Varese) (IT); SANVITO, Andrea, I-22040 MONGUZZO (Como) (IT); MORAMARCO, Alessandro, I-26866 SANT'ANGELO LODIGIANO (Lodi) (IT)
(74) Representative: Vanzini, Christian

(57) **Abstract**

A machine for bending elongated pieces (T), comprising at least one bending tool (110) supported by a pin or shaft (114), wherein said pin or shaft (114) has a cavity (114d) extending along its longitudinal central axis (z), wherein an optical transmitter (130) and an optical receiver (140) are provided, at least one of which is integral with the pin or shaft (114), wherein the optical transmitter (130) and the optical receiver (140) are arranged so that a beam of optical radiation emitted by the optical transmitter propagates inside the cavity of the pin or shaft along the longitudinal central axis, wherein the optical receiver (140) is configured to receive the beam of optical radiation emitted by the optical transmitter (130) and provide a detection signal, the machine further comprising a processing device (150) coupled to the optical receiver (140) and configured to process information concerning the alignment of optical transmitter (130) and optical receiver (140) based on the detection signal provided by the optical receiver (140).

## Description

The present invention relates to a machine for bending elongated pieces, e.g., such as tubes, bars or profiles, of the type comprising at least one bending tool supported by a pin or shaft.

A machine of this type is known, for example, from EP 1591174 A1 or from EP 1700647 A1.

Machines are known which use bending equipment comprising a die, a clamping element adapted to be closed against the die to clamp the piece to be worked, a slide and a counter-slide adapted to cooperate to hold the piece to be bent in position in the zone thereof upstream of its section to be bent.

Machines are also known which use bending equipment comprising a group of rollers, through which the piece is pushed to vary its radius of curvature.

In such known systems, there is at least one bending tool supported by a pin or shaft. In the first example, the die is supported by a die-carrier shaft, while in the second example each roller is supported by a respective pin or shaft. During the bending process, the shafts or pins may be subjected to stresses of various kinds, which can induce bending deformations or vibrations.

It is an object of the present invention to provide a machine for bending elongated pieces in which it is possible to monitor the phenomena described above, so as to be able to apply possible corrective measures.

This and other objects are achieved, according to the invention, by virtue of a machine having the features defined in the appended independent claim 1.

Advantageous embodiments of the invention are specified in the dependent claims, the contents of which are intended to form an integral part of the following description.

In brief, the invention is based on the idea of providing an optical transmitter and an optical receiver, at least one of which is integral with said pin or shaft, said optical transmitter and optical receiver being arranged so that a beam of optical radiation emitted by the optical transmitter propagates inside the cavity of said pin or shaft along said central longitudinal axis, wherein the optical receiver is configured to receive the beam of optical radiation emitted by the optical transmitter and provide a detection signal. The machine further comprises processing means coupled to the optical receiver and configured to process information concerning the alignment of optical transmitter and optical receiver based on the detection signal provided by the optical receiver.

By virtue of this arrangement, it is possible to detect the deformations of the pin or shaft which cause a misalignment between the optical transmitter and the optical receiver, and thus a variation of the optical signal received by the optical receiver compared to that obtained in a resting alignment condition, in which the pin or shaft is not stressed. Furthermore, it is a protected system because at least either said transmitter or said receiver is positioned at a central zone of the pin or shaft, which is the zone least subjected to stresses.

Advantageously, the optical transmitter and optical receiver are both integral with said pin or shaft.

Advantageously, said optical transmitter and optical receiver are arranged at respective ends of the cavity.

Advantageously, said optical transmitter and optical receiver are arranged at the longitudinal central axis of said pin or shaft.

Advantageously, the optical transmitter is a laser source.

Advantageously, the optical receiver is a sensor array of elements sensitive to the optical radiation emitted by the optical transmitter.

It is a further object of the invention a method employing the machine according to the invention and comprising the steps of:
- bending an elongated piece according to predetermined process parameters,
- measuring a misalignment between optical transmitter and optical receiver,
- comparing the misalignment between optical transmitter and optical receiver with a threshold misalignment and, if the result of the comparison violates a tolerance condition, processing a correction of said process parameters.

The method may be used during preproduction tests in the step of setup, or during the step of production, and thus correcting the parameters in real time.

Further features and advantages of the present invention will be more clearly apparent from the following detailed description, made by way of non-limiting example, with reference to the accompanying drawings, in which:
figure 1 diagrammatically shows a machine for bending elongated pieces;
figure 2 diagrammatically shows an example of equipment for bending elongated pieces;
figures 3 to 5 respectively show a perspective view, a side elevation view, and a section view taken along line A-A in figure 4, of a pin or shaft of a bending machine according to the invention; and
figures 6 and 7 show the operating principle of the present invention.

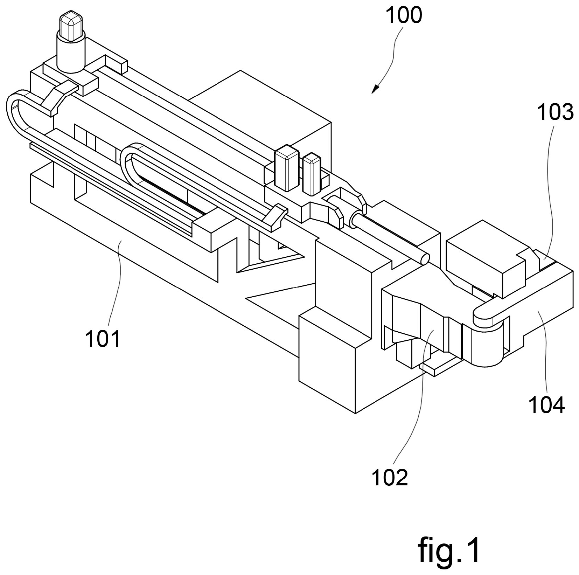

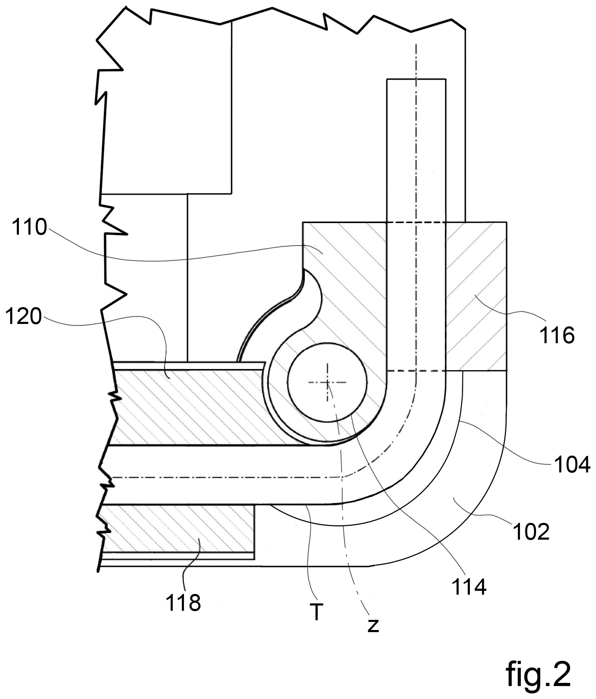

With reference to the figures, a machine for bending elongated pieces, e.g., such as tubes, bars or profiles, is indicated by reference numeral 100 as a whole. In figure 1, a machine frame is indicated by reference numeral 101, and a base configured to support bending equipment is indicated by reference numeral 102, shown only in figure 2. A shelf 103 is conventionally connected to the base 102, by means of a rotatable bending arm 104.

The construction and operation of the machine 100 are known in themselves and will therefore not be described here in detail.

The machine shown is a so-called stretch-bending machine, and hereinafter reference will be made to such a type of machine for the sake of convenience. However, it is understood that the invention is applicable to other types of machine, e.g., roller machines.

The bending equipment of the machine 100 fundamentally comprises a die 110 carried by a die-carrier shaft 114 rotatable about a vertical axis z. The die-carrier shaft 114 constitutes a specific example of the pin or shaft according to the invention.

The processing equipment further comprises a clamping element 116 operable to block, by clamping it against the die 110, the elongated piece T near a section of the elongated piece to be bent. In figure 2, the clamping element 116 is shown in a closed position, in which the clamping element 116 clamps the elongated piece T against the die 110.

The processing equipment further comprises a slide 118, which is generally capable of sliding in the direction of the longitudinal axis of the elongated piece T, and a counter-slide 120 arranged opposite to the slide 118. The slide and counter-slide cooperate to preserve the shape of the section of the elongated piece while bending.

The machine 100 further comprises a piece advancement device (not shown) adapted to grip the elongated piece T to be bent and to advance it in the direction of its longitudinal axis toward the processing equipment, as well as (optionally) to rotate it about its own longitudinal axis.

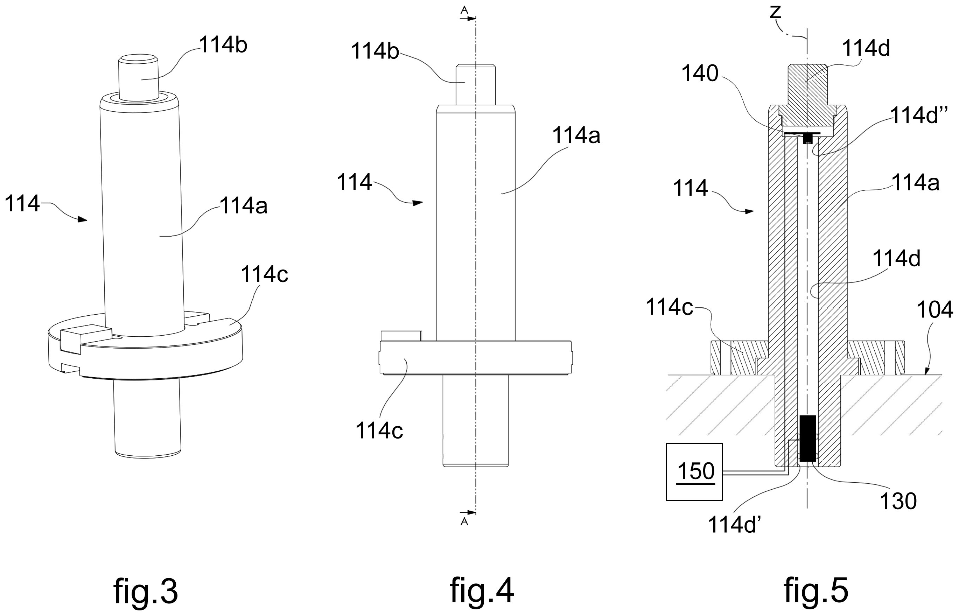

With reference to figures 3 to 5, only the die-carrier shaft 114 is shown. In the section view in figure 5, the die-carrier shaft 114 is shown in mounted condition on the arm 104 of the machine 100. The die-carrier shaft 114 comprises a hollow elongated element 114a at one end of which a cap 114b is mounted. Conventionally, a base plate 114c is further mounted on the die-carrier shaft 114. Conventionally, the base plate 114a serves as a rotational support for the die-carrier shaft 114, and rests on the arm 104 of the machine 100.

Therefore, the die-carrier shaft 114 has a cavity 114d extending along its longitudinal central axis, coincident with the rotation axis z.

An optical transmitter 130 and an optical receiver 140 are arranged at respective ends 114d' and 114d" of the cavity 114d, and are integral with the die-carrier shaft 114. The optical transmitter 130 and the optical receiver 140 are further arranged at the central longitudinal axis z of the die-carrier shaft 114. More in general, the optical transmitter 130 and the optical receiver 140 are arranged so that a beam of optical radiation emitted by the optical transmitter 130 propagates, in at least part of its path from the optical transmitter 130 to the optical receiver 140, inside the cavity 114d along the central longitudinal axis z. The expression "along the central longitudinal axis" means that the beam of optical radiation has at least one propagation component parallel to the central longitudinal axis z.

Advantageously, in the illustrated form, the optical transmitter 130 is placed at the lower end 114d', i.e. the one at the arm 104, while the optical receiver 140 is placed at the upper end 114d", i.e. the one distant from the arm 104, but the configuration with the transmitter and receiver inverted is in any case possible.

In the embodiment shown in the figures, the optical transmitter 130 and the optical receiver 140 are both integral with the die-carrier shaft 114. According to embodiments, not illustrated, only one of the two devices is integral with the die-carrier shaft 114, while the other is external to the die-carrier shaft 114, e.g., housed in a cavity formed in the machine 100 (in particular, in the bending arm 104) and communicating with the cavity 114d.

As stated above, in the illustrated embodiment, the optical transmitter 130 and the optical receiver 140 are arranged at the respective ends 114d', 114d" of the cavity 114d. According to embodiments, not illustrated, at least one of the two devices may be positioned at other longitudinal positions of the cavity 114d, different from the ends. According to further embodiments, the two devices may be positioned in the same position along the cavity 114d. In this case, it is necessary to provide reflecting means, e.g., a mirror, positioned so that the beam of optical radiation propagates in the cavity 114d along the central longitudinal axis z.

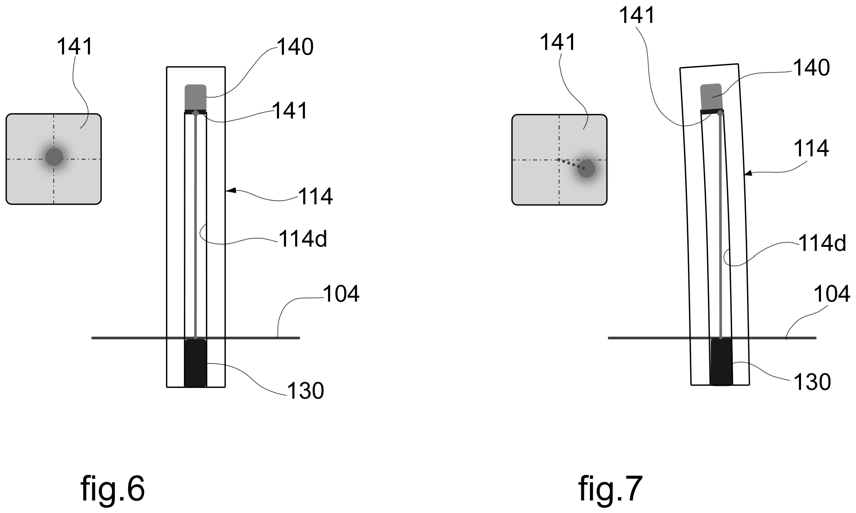

The optical receiver 140 is configured to receive the beam of optical radiation emitted by the optical transmitter 130 and provide a detection signal. For example, the optical transmitter 130 can be a laser source. For example, the optical receiver 140 may be a sensor of the type comprising an array 141 (shown in figures 6 and 7) of micrometric elements sensitive to the optical radiation emitted by the optical transmitter 130, e.g., such as a CCD or CMOS sensor.

The machine 100 further comprises processing means 150 coupled to the optical transmitter 130 and to the optical receiver 140, or only to the optical receiver 140. The processing means 150 are configured to process information concerning the alignment of optical transmitter 130 and optical receiver 140 based on the detection signal provided by the optical receiver 140.

By virtue of the above-described arrangement, it is possible to detect the deformations of the die-carrier shaft 114 which cause a misalignment between the optical transmitter 130 and the optical receiver 140, thereby causing a variation of the optical signal received by the optical receiver 140 with respect to that obtained in a resting alignment condition, in which the die-carrier shaft 114 is not stressed.

A possible example of use of the above-described arrangement is shown in figures 6 and 7. Figure 6 shows an alignment condition at rest in which there is an optical distribution such that the central pixels of the optical receiver 140 detect a greater intensity than the peripheral pixels. Figure 7 shows a bending condition of the die-carrier shaft 114 subjected to load, in which there is, for example, an optical distribution such that the pixels close to one side of the perimeter of the optical receiver 140 detect a greater intensity than the other pixels. In figure 7, the length of the segment which connects the center of the array 141 of the optical receiver 140 to the light spot generated by the beam of optical radiation provides a measurement of the misalignment between the optical transmitter 130 and the optical receiver 140.

The above-mentioned processing means 150 may comprise at least one software and at least one computer device as hardware, e.g., a computer, to be used together with the software, which are adapted to process the alignment information.

For example, the alignment information may be processed by means of a tracking algorithm, which makes it possible to measure the amount by which the pin or shaft deforms, and in which direction.

This information may be used in a feedback loop to calibrate the machine during the bending process.

A specific case concerns the detection of vibrations, which generally are a symptom of the fact that wrinkles are forming in the piece being processed.

Therefore, a method using the machine described above may comprise the steps of:
- bending an elongated piece T according to predetermined process parameters,
- measuring a misalignment between the optical transmitter 130 and the optical receiver 130,
- comparing the misalignment between the optical transmitter 130 and the optical receiver 140 with a threshold misalignment and, if the result of the comparison violates a tolerance condition, processing a correction of said process parameters.

The violation of the tolerance condition may occur, for example, by exceeding the limit misalignment, when the measured misalignment increases until it reaches a value greater than the limit misalignment.

In other embodiments, the violation of the tolerance condition may, for example, consist in the exceeding of a tolerance distance from the limit misalignment, when the measured misalignment increases until it reaches a value which, while being smaller than the limit misalignment, falls within a given range therefrom.

In any case, the control and correction procedure described above may be used during preproduction tests in the step of machine setup or during the step of production, thereby correcting the parameters in real time.

The foregoing description applies equally to other bending machines comprising pins or shafts which support bending tools and may be subjected to stresses similar to those described above. A specific case may be, for example, that of pins or shafts which support the bending rollers in roller-bending machines.

Without prejudice to the principle of the invention, the embodiments and the constructional details may be broadly varied relative to the above description merely disclosed by way of a non-limiting example, without because of this departing from the scope of the invention as defined in the appended claims.

## Claims

1. A machine for bending elongated pieces (T), comprising at least one bending tool (110) supported by a pin or shaft (114), **characterized in that** said pin or shaft (114) has a cavity (114d) extending along its longitudinal central axis (z), wherein an optical transmitter (130) and an optical receiver (140) are provided, at least one of which is integral with said pin or shaft (114), said optical transmitter (130) and optical receiver (140) being arranged so that a beam of optical radiation emitted by the optical transmitter propagates inside the cavity of said pin or shaft along said longitudinal central axis, wherein the optical receiver (140) is configured to receive the beam of optical radiation emitted by the optical transmitter (130) and provide a detection signal, the machine further comprising processing means (150) coupled to the optical receiver (140) and configured to process information concerning the alignment of optical transmitter (130) and optical receiver (140) based on the detection signal provided by the optical receiver (140).

2. A machine according to claim 1, wherein said optical transmitter and optical receiver are both integral with said pin or shaft.

3. A machine according to claim 2, wherein said optical transmitter and optical receiver are arranged at respective ends (114d', 114d") of the cavity (114d).

4. A machine according to claim 2 or 3, wherein said optical transmitter and optical receiver are arranged at the longitudinal central axis (z) of said pin or shaft (114).

5. A machine according to any of the preceding claims, wherein the optical transmitter (130) is a laser source.

6. A machine according to any of the preceding claims, wherein the optical receiver (140) is a sensor comprising an array of elements sensitive to optical radiation emitted by the optical transmitter (130).

7. A machine according to any of the preceding claims, wherein said pin or shaft (114) supports a bending die (110) or a bending roller.

8. A method using the machine according to any of the preceding claims, comprising the steps of:
- bending an elongated piece (T) according to predetermined process parameters,
- measuring a misalignment between optical transmitter (130) and optical receiver (140),
- comparing the misalignment between optical transmitter (130) and optical receiver (140) with a threshold misalignment and, if the result of the comparison violates a tolerance condition, processing a correction of said process parameters.
